# FASCICULE DE BREVET EUROPEEN

(11) **EP 1 156 271 B1**
(45) Date de publication et mention de la délivrance du brevet: **30.07.2008**
(21) Numéro de dépôt: 01401220.7
(22) Date de dépôt: 14.05.2001
(51) Int. Cl.: F21V 25/00, F21V 5/04, H05B 37/03, F21S 8/08, F21S 8/10, F21W 101/02, F21W 111/02, F21Y 101/02

(54) **Système d'éclairement à détection de défaillance**
Beleuchtungssystem mit Fehlererkennung
Lighting system with failure detection

(30) Priorité: 18.05.2000 FR 0006371
(43) Date de publication de la demande: 21.11.2001
(73) Titulaire: Sagem Communications, 75015 Paris (FR)
(72) Inventeur: Merlin, Bruno, 95100 Argeneuil (FR)
(74) Mandataire: Jaunez, Xavier

(56) Documents cités:
- FR-A- 2 550 033
- GB-A- 2 097 909
- US-A- 3 541 504
- US-A- 4 904 991
- PATENT ABSTRACTS OF JAPAN vol. 1995, no. 09, 31 octobre 1995 (1995-10-31) & JP 07 161480 A (HITACHI COMMUN SYST INC), 23 juin 1995 (1995-06-23)

## Description

La présente invention concerne un système d'éclairement, du type comportant une source de lumière, un dispositif optique de mise en parallèle du faisceau lumineux émis par ladite source, et une lentille bombée traversée par ledit faisceau lumineux.

Un tel système d'éclairement se rencontre par exemple couramment comme équipement de feu de signalisation routière. L'invention n'est toutefois pas limitée à ce type d'application, mais englobe également d'autres systèmes d'éclairement, notamment ceux qui sont intégrés aux blocs optiques de véhicules automobiles.

L'invention s'intéresse plus particulièrement à une éventuelle situation de défaillance de la source de lumière du système d'éclairement.

Dans le domaine des véhicules automobiles, l'état de la technique le plus proche est illustré par les documents US-A-3 541 504, GB-A-2 097 909 et FR-A-2 550 033.

Le document US-A-3 541 504 décrit un système indicateur de la défaillance d'une ampoule de phare de véhicule automobile, dans lequel un capteur photosensible est disposé à l'intérieur de l'enceinte du phare pour recevoir de la lumière directement de l'ampoule, et est branché de façon à allumer une lampe témoin sur le tableau de bord en cas de défaillance de l'ampoule.

Le document GB-A-2 097 909 décrit une lentille de phare d'automobile selon le préambule de la revendication 1, qui présente une extension périphérique montée sur l'automobile pour que cette extension périphérique dépasse de la carrosserie et soit ainsi visible par le conducteur. Cette extension périphérique, éventuellement couverte d'un réflecteur, permet le passage d'une partie de la lumière générée par l'ampoule, de sorte que le conducteur vérifie visuellement si l'ampoule est en fonctionnement ou non.

On rencontre en outre des dispositifs de détection de défaillance de source de lumière pour les feux de signalisation, qui sont basés sur la mesure du courant consommé sur la ligne d'alimentation. On utilise alors un détecteur de courant, et lorsque l'intensité passant dans le détecteur descend en dessous d'un seuil prédéterminé, on considère que la source de lumière ne permet plus d'assurer la fonction du système d'éclairement, en particulier que l'ampoule est claquée. Un signal de maintenance est alors émis vers le central pour faire état de cette situation.

Dans le cas de systèmes d'éclairement utilisant un tube au néon, on a parfois utilisé une fibre optique associée au support du tube, pour prélever le signal, avec un capteur adapté. Là encore, la défaillance n'est repérée que par une détection d'intensité, ce qui n'est pas très satisfaisant dans le cas d'un tube au néon en raison du manque de précision.

On peut enfin citer, pour compléter l'arrière-plan technologique de l'invention, les documents US-A-4 904 991 et JP-A-07 161 480.

L'invention a pour but de concevoir un système d'éclairement équipé d'un dispositif de détection de défaillance qui soit à la fois fiable, de fabrication aisée, et utilisable dans divers types de systèmes d'éclairement.

Ce problème est résolu conformément à l'invention grâce à un système d'éclairement, du type comportant une source de lumière et une lentille, ledit système étant équipé d'un dispositif de détection d'une défaillance de la source de lumière, dispositif qui comporte un guide de lumière incorporé à la lentille en étant agencé pour amener un flux lumineux vers la périphérie de ladite lentille, et un capteur photosensible disposé au niveau de la périphérie de la lentille, en regard de la sortie du guide de lumière, ledit capteur étant agencé pour émettre un signal de défaillance si l'intensité du flux lumineux sortant dudit guide tombe en dessous d'un seuil prédéterminé.

L'utilisation d'un guide de lumière incorporé à la lentille elle-même du système d'éclairement se démarque ainsi radicalement de l'approche traditionnelle qui consistait à détecter le courant consommé sur la ligne d'alimentation.

Dans un premier mode d'exécution de l'invention, le guide de lumière du dispositif de détection est une barrette saillant de la surface intérieure concave de la lentille.

Avantageusement alors, la barrette est disposée radialement, en s'étendant d'un point voisin du centre de la lentille à un point de la périphérie de ladite lentille. En particulier, la barrette est de forme générale parallélépipédique, en étant incurvée sur sa longueur.

Conformément à un autre mode d'exécution de l'invention, le guide de lumière du dispositif de détection est une fibre optique intégrée dans l'épaisseur de la lentille.

De préférence alors, la fibre optique est disposée dans un passage interne associé de la lentille, ledit passage étant agencé radialement et débouchant à ses deux extrémités, l'une étant agencée au voisinage du centre de la surface intérieure concave de la lentille, et l'autre sur la périphérie de ladite lentille.

On pourra prévoir que le capteur photosensible comporte un tronçon de fibre optique dont une extrémité est en regard de la sortie du guide de lumière, et dont l'autre extrémité est reliée à une photodiode.

Le système d'éclairement selon l'invention est également utilisable, dans une variante particulièrement avantageuse, avec deux sources de lumière distinctes et adjacentes, les deux sources étant disposées au voisinage du foyer du dispositif optique. Ainsi dans ce cas, le système d'éclairement comporte deux sources de lumière distinctes et adjacentes, dont l'une est en service et l'autre est en réserve, et il est avantageux de prévoir que le capteur photosensible est alors relié à un moyen de commutation associé à l'alimentation en courant desdites sources, de façon que le signal de défaillance émis par ledit capteur déclenche l'alimentation de la source en réserve en cas de défaillance de la source en service.

Il sera avantageux de prévoir que la ou les sources de lumière utilisées sont constituées par des diodes électroluminescentes (LED).

Le système d'éclairement selon l'invention pourra être intégré à une structure de feu de signalisation routière, ou encore à un bloc optique de véhicule automobile.

D'autres caractéristiques et avantages de l'invention apparaîtront plus clairement à la lumière de la description qui va suivre et des dessins annexés, concernant des modes de réalisation particuliers, en référence aux figures où :
- la figure 1 illustre en coupe axiale un système d'éclairement conforme à l'invention, dont le dispositif de détection de défaillance comporte un guide de lumière agencé sous la forme d'une barrette en saillie sur la surface intérieure de la lentille;
- la figure 2 est une vue de détail illustrant la partie de la lentille qui présente la barrette précitée formant guide de lumière;
- la figure 3 est une coupe axiale d'une variante du système d'éclairement précédent, dans laquelle le dispositif de détection comporte un guide de lumière agencé sous la forme d'une fibre optique intégrée dans l'épaisseur de la lentille;
- la figure 4 est une vue de détail illustrant la zone de la lentille dans laquelle est intégrée la fibre optique précitée du dispositif de détection;
- la figure 5 illustre un mode d'exécution particulier du capteur photosensible utilisant un tronçon de fibre optique;
- la figure 6 est une vue en coupe illustrant une autre variante du système d'éclairement de l'invention, dans lequel deux sources de lumière sont prévues, avec un moyen de commutation associé permettant de passer d'une source à l'autre.

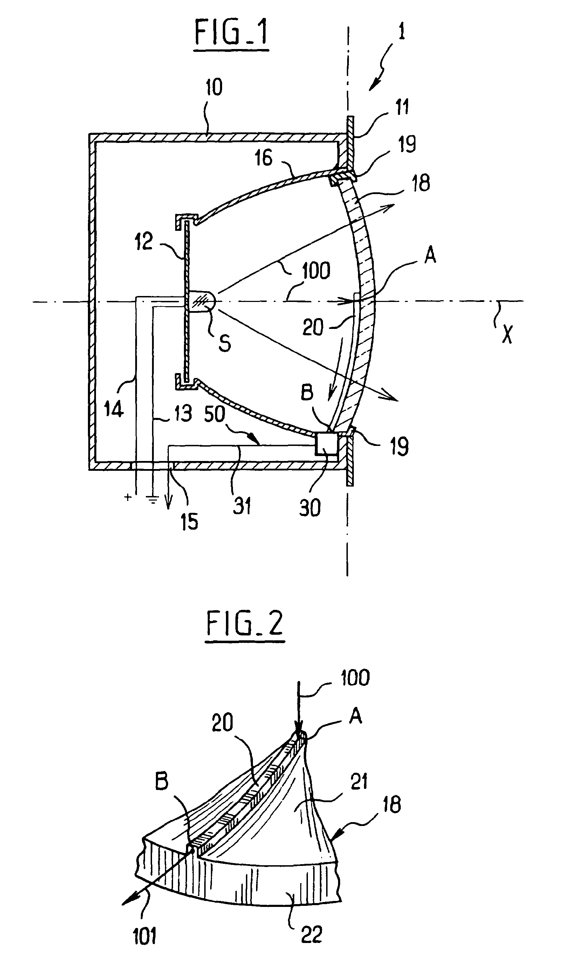

Sur la figure 1, on distingue un système d'éclairement monté dans un boîtier 10 qui est intégré à une structure M schématisée ici en trait mixte, laquelle structure peut être un mât de feu de signalisation routière, ou encore un bloc optique de véhicule automobile.

Le système d'éclairement, référencé 1, est du type comportant une source de lumière S, émettant un faisceau lumineux 100, et une lentille bombée 18 traversée par ledit faisceau lumineux.

On a prévu ici une source de lumière S qui est une diode électroluminescente (LED) dont la puissance est adaptée à l'éclairement demandé dans l'application concernée. La source S est montée sur une plaquette 12, et ses fils d'alimentation sont référencés 13, 14, lesdits fils passant par une ouverture associée 15 du boîtier 10. La plaquette 12 est logée dans un boîtier 16 portant la lentille 18.

La lentille bombée 18 est supportée par des pattes 19 qui peuvent être solidaires d'un capotage de fermeture 11. Dans le cas d'une application aux feux de signalisation, ce capotage 11 est réalisé sous la forme d'un volet articulé autour d'un axe vertical, de façon à pouvoir accéder aisément aux accessoires disposés à l'intérieur du boîtier 10 par simple pivotement du volet, ledit pivotement n'entraînant que la lentille bombée 18. On a noté X l'axe du système optique, qui part de la source S, et passe par le centre de la lentille bombée 18. Dans le cas d'une application à l'équipement de feux de signalisation, la lentille 18 est de façon connue en soi équipée, sur sa surface intérieure concave de petits reliefs visant à éviter les effets "fantôme" indésirables par suite d'un éclairement par les rayons du soleil.

Conformément à une caractéristique essentielle de l'invention, le système d'éclairement 1 est équipé d'un dispositif 50 de détection d'une défaillance de la source de lumière S, ledit dispositif comportant un guide de lumière 20 incorporé à la lentille 18 en étant agencé pour amener un flux lumineux vers la périphérie de ladite lentille, et un capteur photosensible 30 disposé au niveau de la périphérie de la lentille 18, en regard de la sortie du guide de lumière 20, ledit capteur étant agencé pour émettre un signal de défaillance si l'intensité du flux lumineux sortant dudit guide tombe en dessous d'un seuil prédéterminé.

En l'espèce, le guide de lumière du dispositif de détection 50 est une barrette 20 agencée en saillie de la surface intérieure concave de la lentille 18. L'agencement de la barrette 20 sera mieux compris en se référant au détail de la figure 2, qui illustre la zone concernée de la lentille bombée 18.

La surface intérieure concave de la lentille 18 est notée 21, et l'on constate que la barrette 20 est ici disposée radialement, en s'étendant d'un point A voisin du centre de la lentille 18, à un point B de la périphérie notée 22 de ladite lentille. En l'espèce, la barrette 20 est de forme générale parallélépipédique, en étant incurvée sur sa longueur. Les trois faces longitudinales sensiblement planes de la barrette 20 en saillie servent de guide de lumière, et permettent d'amener un flux lumineux 100 entrant au niveau de son extrémité centrale au niveau du point A, vers la sortie au niveau du point B, sous forme d'un faisceau 101 sortant radialement de la barrette 20, c'est-à-dire dans le plan principal de celle-ci qui passe par l'axe optique X. Le flux lumineux sortant au niveau du point B de l'extrémité de la barrette 20 arrive directement sur le capteur photosensible 30, lequel capteur est de préférence porté par la structure fixe du boîtier 10. Une ligne 31 en sortie du capteur photosensible 30 sert à transmettre le signal de défaillance qui est émis lorsque l'intensité du flux lumineux sortant de la barrette 20 tombe en dessous d'un seuil prédéterminé. Ce signal de défaillance facilite considérablement la maintenance du système, en avertissant le central auquel sont reliés les différents feux de signalisation que la source d'un feu particulier est devenue défaillante. Ceci permet alors d'organiser immédiatement une visite de maintenance pour le remplacement de la source S défaillante.

La mise en place d'une telle barrette radiale sur la surface intérieure concave de la lentille 18 ne représente pas une complication très importante dans la fabrication d'ensemble. Il suffit par exemple de modifier en conséquence le moule servant à la fabrication de la lentille bombée 18, la barrette 20 étant alors d'une pièce avec la lentille 18 qui la porte.

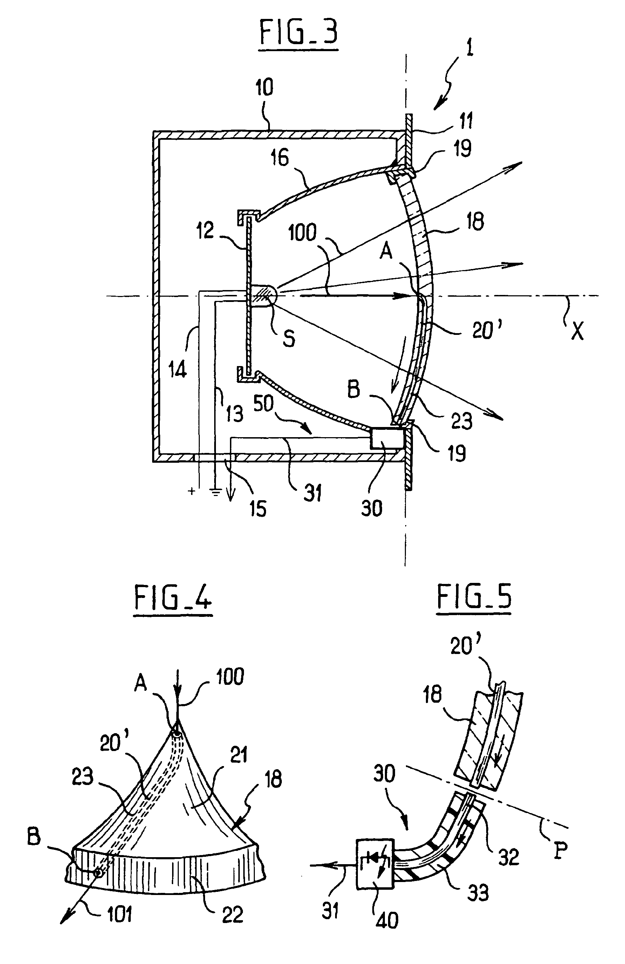

On va maintenant décrire une autre variante du système d'éclairement de l'invention en référence aux figures 3 à 5.

Le système d'éclairement représenté sur ces figures se distingue du précédent uniquement par la structure du guide de lumière incorporé à la lentille 18. En effet, la barrette saillante 20 du mode de réalisation précédent est ici remplacée par une fibre optique 20' qui est intégrée dans l'épaisseur de la lentille 18. Pour cela, on a pratiqué un passage interne 23 dans lequel a été enfilé un tronçon de fibre optique 20'. Ce passage interne associé 23 est en l'espèce agencé radialement, et il débouche à ses deux extrémités : une de ces extrémités notée A est au voisinage du centre de la surface intérieure concave 21 de la lentille 18, et l'autre extrémité B débouche au niveau de la périphérie 22 de ladite lentille. Ainsi, au niveau du point A, une extrémité de la fibre optique 20' reçoit un faisceau rentrant 100, et le faisceau de sortie 101 s'échappe de la fibre optique 20', dans une direction sensiblement radiale, par le point B situé sur la périphérie 22 de la lentille 18.

Comme précédemment, on utilise un capteur photosensible 30 disposé au niveau de la périphérie 22 de la lentille 18, en regard de la sortie B de la fibre optique 20. La ligne 31 permet d'émettre un signal de défaillance si l'intensité du flux lumineux sortant de la fibre optique 20' tombe en dessous d'un seuil prédéterminé.

On pourra éventuellement, comme cela est illustré sur la figure 5, prévoir que le capteur photosensible 30 comporte un tronçon de fibre optique 32, ici entouré d'un enrobage de protection 33, dont une extrémité est en regard de la sortie du guide de lumière 20', au niveau du plan de sortie noté P, et dont l'autre extrémité est reliée à une photodiode 40.

Dans les modes d'exécution qui précèdent, on a utilisé une source de lumière unique S, de préférence réalisée sous la forme d'une diode électroluminescente (LED).

Il est toutefois très intéressant d'utiliser deux sources de lumière distinctes et adjacentes, toutes deux disposées sensiblement au foyer du dispositif optique, et de profiter alors du signal de défaillance émis par le capteur photosensible pour organiser l'éclairement de l'une ou l'autre des deux sources.

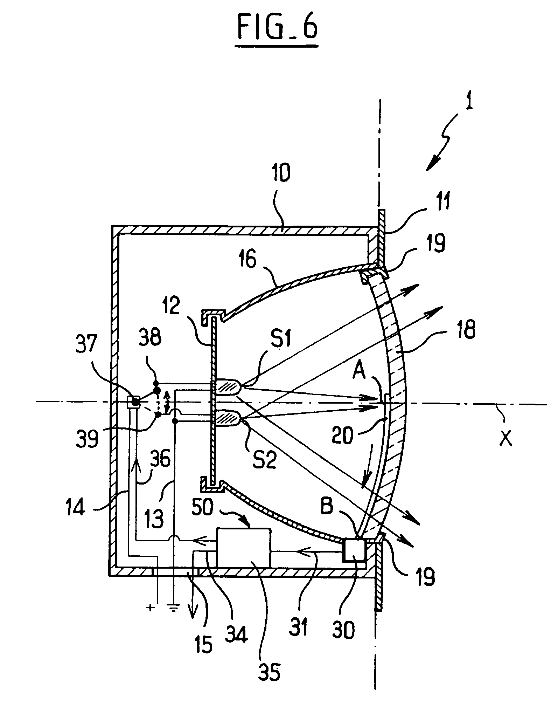

Cette variante d'exécution est illustrée sur la figure 6, et le système d'éclairement illustré se différencie de celui des figures 1 et 2 par l'utilisation de deux sources de lumière S1 et S2 distinctes et adjacentes. L'une de ces sources est en service tandis que l'autre est en réserve. Lorsque l'une des sources est en service, le système d'éclairement se comporte comme le système précédemment décrit, c'est-à-dire que le guide de lumière, en l'espèce la barrette 20, sert à amener un flux lumineux vers la périphérie de la lentille 18, et le capteur photosensible 30 qui est disposé au niveau de la dite périphérie, en regard de la sortie du guide de lumière, émet un signal de défaillance lorsque l'intensité du flux lumineux sortant du guide de lumière 20 tombe en dessous d'un seuil prédéterminé.

On a toutefois ici prévu que le capteur photosensible 30 est relié à un moyen de commutation associé à l'alimentation en courant desdites sources. En effet, les sources S1 et S2 ont chacune un fil relié à une branche commune 13 pour la masse, et un autre fil pour l'alimentation, dont la liaison, par la ligne 14, se fait ici par l'intermédiaire d'un basculeur 37 qui peut établir le contact, soit avec la borne 38 pour la mise en service de la seule source S1, soit avec la borne 39 pour la mise en service de la seule source S2. On a alors prévu un commutateur 35, relié au capteur photosensible 30 par la ligne 31, et dont la ligne de sortie 36 sert à commander le basculeur 37.

Ainsi, dès que le capteur photosensible 30 émet un signal de défaillance, ce signal est envoyé au commutateur 35 qui actionne instantanément le basculeur 37 pour changer de source, de façon à passer sur l'autre source qui était en réserve. Dans ce cas, il n'y donc pas de rupture de fonctionnement contrairement aux modes d'exécution précédemment décrits qui n'utilisaient qu'une seule source S.

Bien entendu, on pourra prévoir que le commutateur 35 émet par une ligne 34 associée un signal de maintenance envoyé à l'unité centrale qui gère les différents systèmes d'éclairement, par exemple les feux de signalisation, de façon à avertir le service de maintenance qu'il convient de changer l'une des deux sources du système d'éclairement concerné. Cependant, le système d'éclairement continue à fonctionner en attendant la visite des services de maintenance, car il utilise alors la source de réserve.

Dans ce dernier mode d'exécution, il est très intéressant de prévoir que les sources de lumière S1, S2 soient constituées par des diodes électroluminescentes (LED), ces composants étant d'un encombrement beaucoup plus faible que les ampoules traditionnelles. Il est alors aisé de disposer deux diodes électroluminescentes l'une à côté de l'autre.

L'invention n'est pas limitée aux modes d'exécution qui viennent d'être décrits, mais englobe au contraire toute variante reprenant, avec des moyens équivalents, les caractéristiques essentielles énoncées plus haut.

En particulier bien que l'invention ait été décrite en relation avec une source de lumière sous forme de diode électroluminescente on peut également mettre en oeuvre l'invention avec des ampoules traditionnelles associées à un dispositif optique de remise en parallèle du faisceau lumineux.

## Revendications

1. Système d'éclairement, du type comportant une source de lumière (S;S1, S2) et une lentille (18), équipé d'un dispositif (50) de détection d'une défaillance de la source de lumière (S;S1, S2), ledit dispositif comportant un guide de lumière (20, 20') incorporé à la lentille (18) en étant agencé pour amener un flux lumineux vers la périphérie (22) de ladite lentille, **caractérisé en ce que** le système comporte un capteur photosensible (30) disposé au niveau de la périphérie (22) de la lentille (18), en regard de la sortie (B) du guide de lumière (20, 20'), ledit capteur étant agencé pour émettre un signal de défaillance si l'intensité du flux lumineux sortant dudit guide tombe en dessous d'un seuil prédéterminé.

2. Système d'éclairement selon la revendication 1, **caractérisé en ce que** le guide de lumière du dispositif de détection (50) est une barrette (20) saillant de la surface intérieure concave (21) de la lentille (18).

3. Système d'éclairement selon la revendication 2, **caractérisé en ce que** la barrette (20) est disposée radialement, en s'étendant d'un point (A) voisin du centre de la lentille (18) à un point (B) de la périphérie (22) de ladite lentille.

4. Système d'éclairement selon la revendication 3, **caractérisé en ce que** la barrette (20) est de forme générale parallélépipédique, en étant incurvée sur sa longueur.

5. Système d'éclairement selon la revendication 1, **caractérisé en ce que** le guide de lumière du dispositif de détection (50) est une fibre optique (20') intégrée dans l'épaisseur de la lentille (18).

6. Système d'éclairement selon la revendication 5, **caractérisé en ce que** la fibre optique (20') est disposée dans un passage interne associé (23) de la lentille (18), ledit passage étant agencé radialement et débouchant à ses deux extrémités, l'une (A) étant agencée au voisinage du centre de la surface intérieure concave (21) de la lentille (18), et l'autre (B) sur la périphérie (22) de ladite lentille.

7. Système d'éclairement selon l'une des revendications 1 à 6, **caractérisé en ce que** le capteur photosensible (30) comporte un tronçon de fibre optique (32) dont une extrémité est en regard de la sortie du guide de lumière (20;20'), et dont l'autre extrémité est reliée à une photodiode (40).

8. Système d'éclairement selon l'une des revendications 1 à 7, **caractérisé en ce qu'**il comporte deux sources de lumière (S1, S2) distinctes et adjacentes, dont l'une est en service et l'autre est en réserve, et le capteur photosensible (30) est relié à un moyen de commutation (35, 37) associé à l'alimentation en courant desdites sources, de façon que le signal de défaillance émis par ledit capteur déclenche l'alimentation de la source en réserve en cas de défaillance de la source en service.

9. Système d'éclairement selon l'une des revendications 1 à 8, **caractérisé en ce que** la ou les sources de lumière (S;S1, S2) sont constituées par des diodes électroluminescentes (LED).

10. Système d'éclairement selon l'une des revendications 1 à 9, **caractérisé en ce qu'**il est intégré à une structure (M) de feu de signalisation routière.

11. Système d'éclairement selon l'une des revendications 1 à 9, **caractérisé en ce qu'**il est intégré à un bloc optique de véhicule automobile.

## Claims

1. A lighting system of the type comprising a light source (S; S1, S2) and a lens (18), the system being fitted with a device (50) for detecting failure of the light source (S; S1, S2), said device comprising a light guide (20, 20') incorporated in the lens (18) and arranged to bring light flux to the periphery (22) of said lens, the system being **characterized in that** a light sensor (30) is placed at the periphery (22) of the lens (18) facing the outlet (B) from the light guide (20, 20'), said sensor being arranged to issue a failure signal if the intensity of the light flux leaving said guide drops below a predetermined threshold.

2. A lighting system according to claim 1, **characterized in that** the light guide of the detector device (50) is a strip (20) projecting from the concave inside surface (21) of the lens (18).

3. A lighting system according to claim 2, **characterized in that** the strip (20) is disposed radially, extending from a point (A) close to the center of the lens (18) to a point (B) at the periphery (22) of said lens.

4. A lighting system according to claim 3, **characterized in that** the strip (20) is generally rectangular in shape, being curved lengthwise.

5. A lighting system according to claim 1, **characterized in that** the light guide of the detector device (50) is an optical fiber (20') integrated in the thickness of the lens (18).

6. A lighting system according to claim 5, **characterized in that** the optical fiber (20') is disposed in an associated internal passage (23) of the lens (18), said passage extending radially and opening out at both ends, one end (A) being arranged in the vicinity of the center of the concave inside surface (21) of the lens (18), and the other end (B) being arranged at the periphery (22) of said lens.

7. A lighting system according to any one of claims 1 to 6, **characterized in that** the light sensor (30) includes a segment of optical fiber (32) having one end facing the outlet from the light guide (20; 20'), and having its other end connected to a photodiode (40).

8. A lighting system according to any one of claims 1 to 7, **characterized in that** it includes two distinct light sources (S1, S2) that are adjacent, one of the sources being in service and the other being on standby, and the light sensor (30) is connected to switch means (35, 37) associated with the power supply for said sources in such a manner that the failure signal issued by said sensor causes the standby source to be powered in the event of the source that was in service failing.

9. A lighting system according to any one of claims 1 to 8, **characterized in that** the or each light source (S; S1, S2) is constituted by a light-emitting diode (LED).

10. A lighting system according to any one of claims 1 to 9, **characterized in that** it is integrated in a traffic-light structure (M).

11. A lighting system according to any one of claims 1 to 9, **characterized in that** it is integrated in a motor vehicle light unit.

## Patentansprüche

1. Beleuchtungssystem, der Art umfassend eine Lichtquelle (S; S1, S2) und eine Linse (18), wobei das System mit einer Vorrichtung (50) zum Erfassen eines Fehlers der Lichtquelle (S; S1, S2) ausgestattet ist, wobei die Vorrichtung eine Lichtführung (20, 20') umfasst, die in die Linse (18) aufgenommen ist, indem sie so ausgebildet ist, dass sie einen Lichtfluss zum Umfangsrand (22) der genannten Linse leitet, **dadurch gekennzeichnet, dass** das System einen lichtempfindlichen Sensor (30) umfasst, der im Bereich des Umfangsrands (22) der Linse (18) angeordnet ist, gegenüber dem Ausgang (B) der Lichtführung (20, 20'), wobei der Sensor so ausgebildet ist, dass er ein Fehlersignal abgibt, wenn die Intensität des Lichtflusses, der aus der Führung austritt, unter einen vorgegebenen Schwellenwert fällt.

2. Beleuchtungssystem nach Anspruch 1, **dadurch gekennzeichnet, dass** die Lichtführung der Erfassungsvorrichtung (50) eine Leiste (20) ist, die von der konkaven Innenfläche (21) der Linse (18) absteht.

3. Beleuchtungssystem nach Anspruch 2, **dadurch gekennzeichnet, dass** die Leiste (20) radial angeordnet ist, indem sie sich von einem Punkt (A) nahe dem Mittelpunkt der Linse (18) zu einem Punkt (B) des Umfangsrands (22) der genannten Linse erstreckt.

4. Beleuchtungssystem nach Anspruch 3, **dadurch gekennzeichnet, dass** die Leiste (20) im Wesentlichen die Form eines Parallelepipeds hat und dabei über ihre Länge gebogen ist.

5. Beleuchtungssystem nach Anspruch 1, **dadurch gekennzeichnet, dass** die Lichtführung der Erfassungsvorrichtung (50) eine optische Faser (20') ist, die in die Dicke der Linse (18) integriert ist.

6. Beleuchtungssystem nach Anspruch 5, **dadurch gekennzeichnet, dass** die optische Faser (20') in einem dazugehörigen Innenkanal (23) der Linse (18) angeordnet ist, wobei der Kanal radial ausgebildet und an seinen beiden Enden offen ist, wobei eines (A) nahe dem Mittelpunkt der konkaven Innenfläche (21) der Linse (18) ausgebildet ist und das andere (B) am Umfangsrand (22) der Linse ausgebildet ist.

7. Beleuchtungssystem nach einem der Ansprüche 1 bis 6, **dadurch gekennzeichnet, dass** der lichtempfindliche Sensor (30) aus einem Abschnitt (32) der optischen Faser besteht, von dem ein Ende gegenüber dem Ausgang der Lichtführung (20; 20') liegt und das andere Ende mit einer Photodiode (40) verbunden ist.

8. Beleuchtungssystem nach einem der Ansprüche 1 bis 7, **dadurch gekennzeichnet, dass** es zwei getrennte und zueinander benachbarte Lichtquellen (S 1, S2) umfasst, von denen eine im Betrieb und die andere in Reserve ist, und der lichtempfindliche Sensor (30) mit Schaltmitteln (35, 37) verbunden ist, die mit der Stromversorgung für die genannten Quellen verbunden sind, derart, dass das Fehlersignal, das von dem genannten Sensor abgegeben wird, im Falle eines Fehlers der im Betrieb befindlichen Quelle die Versorgung der Reservequelle auslöst.

9. Beleuchtungssystem nach einem der Ansprüche 1 bis 8, **dadurch gekennzeichnet, dass** die Lichtquelle bzw. die Lichtquellen (S; S1, S2) aus Leuchtdioden (LED) gebildet sind.

10. Beleuchtungssystem nach einem der Ansprüche 1 bis 9, **dadurch gekennzeichnet, dass** es in eine Struktur (M) einer Verkehrsampel integriert ist.

11. Beleuchtungssystem nach einem der Ansprüche 1 bis 9, **dadurch gekennzeichnet, dass** es in einen Scheinwerfereinsatz eines Kraftfahrzeugs integriert ist.
